# EUROPÄISCHE PATENTSCHRIFT

(11) **EP 3 950 426 B1**
(45) Veröffentlichungstag und Bekanntmachung des Hinweises auf die Patenterteilung: **21.05.2025**
(21) Anmeldenummer: 21189786.3
(22) Anmeldetag: 05.08.2021
(51) Int. Cl.: B60P 3/34

(54) **CAMPINGBOX**
CAMPING BOX
COFFRE DE CAMPING

(30) Priorität: 08.08.2020 DE 202020003416 U; 21.10.2020 DE 202020004416 U
(43) Veröffentlichungstag der Anmeldung: 09.02.2022
(73) Patentinhaber: Graf, Marcel, 02929 Rothenburg (DE)
(72) Erfinder: Graf, Marcel, 02929 Rothenburg (DE)
(74) Vertreter: Kailuweit & Uhlemann Patentanwälte Partnerschaft mbB

(56) Entgegenhaltungen:
- WO-A1-2020/111355
- DE-B3- 102015 005 661
- JP-A- 2000 052 845
- KR-A- 20180 045 903
- KR-B1- 101 437 963

## Beschreibung

Die Erfindung betrifft eine Campingbox, die herausnehmbar im Ladebereich eines geeigneten Automobils angeordnet ist und zu einem nutzbaren Raum entfaltet werden kann. Der nutzbare Raum ist an der Ladekante des Automobils angeordnet, gegenüber der Umgebung abgeschlossen und lediglich gegenüber dem Inneren des Automobils geöffnet. Geeignete Automobile umfassen dabei insbesondere VANs, Transporter, Lieferwagen oder sonstige mit Steilheck und einer oder zwei Hecktüren oder einer Heckklappe ausgestattete Fahrzeuge.

Campingboxen üblicher Bauart werden vor Reiseantritt in das jeweilige Fahrzeug geladen oder auf dem Dach befestigt. Sie dienen meist zum Lagern von Kochstellen, Kühlgeräten, Toiletten oder Liegeflächen.

Es gibt auch Varianten den Wohnraum von Caravans zu vergrößern. Diese sind meist mit dem Fahrzeug fest verbunden. Das Fahrzeug wird dadurch stark auf die Nutzung als Caravan eingeschränkt. Um dieses Problem zu umgehen werden verschiedene Konstruktionen vorgeschlagen, die ein vollständiges Entfernen der Campingbox und damit die übliche Nutzung des Fahrzeugs außerhalb seiner Caravan-Funktion ermöglichen.

Die KR 2018 0 045 903 A beschreibt ein Automobilzelt und ein Automobil mit einem solchen Zelt. Das Automobilzelt umfasst eine Bodenplatte, die am Boden des Kofferraums des Autos angeordnet. Die Bodenplatte ist am hinteren Bodenabschnitt des Kofferraums herausziehbar. Weiterhin ist eine Vielzahl von Trägern vorgesehen sowie Zeltstoff, der aus Aufwickelvorrichtungen herausgezogen und zwischen den Enden der Träger gespannt werden kann. Darüber hinaus sind Befestigungsvorrichtungen an den Trägern zur lösbaren Halterung des Zeltstoffs vorgesehen. Mehrere Stützstangen sind drehbar mit der Innenkante des geöffneten Kofferraumdeckels verbunden. Stützstäbe stützen den hinteren unteren Abschnitt der Bodenplatte gegenüber dem Boden ab. Die zeltartige Ausführung ist jedoch hinsichtlich der Witterungsbeständigkeit und des Wärmedämmvermögens in ihren Möglichkeiten beschränkt.

Die WO2020/111355 A1 offenbart ein Raumerweiterungsmodul und ein dieses umfassendes Raumerweiterungsmobil, wobei das Raumerweiterungsmodul umfasst: ein äußeres Erweiterungsplattenteil, das dazu vorgesehen ist, aus einem Frachtladeraum eines Fahrzeugs herausgezogen zu werden; und ein inneres Ausdehnungsplattenteil, das vorgesehen ist, um mit dem äußeren Ausdehnungsplattenteil verriegelt zu werden, und von der Außenseite des Frachtladeraums des Fahrzeugs zur linken oder rechten Seite in Bezug auf das äußere Ausdehnungsplattenteil bewegt wird, um sich auszudehnen den Innenraum des äußeren Verkleidungsteils.

Die KR10143763 B1 beschreibt ein Wohnmobil mit einer herausziehbaren Campingbox, wobei die Campingbox als fester Bestandteil im Laderaum des Fahrzeugs verbleibt.

Weiterhin beschreibt die KR20180045903 A ein Autozelt mit einer Bodenplatte, die an einem Boden eines Kofferraums vorgesehen ist, um zu einem hinteren Bodenabschnitt des Kofferraums herausgezogen zu werden; einer Vielzahl von Trägern; Zeltstoff, der zwischen beide Enden der Stütze gekoppelt ist, um eine Vielzahl von Stützstangen zu bedecken, um lösbar in einem Roll-Schärpe-Typ gewickelt zu werden; und eine Befestigungseinheit, die an der Stütze vorgesehen ist, so dass ein von der Stütze gelöster Endabschnitt des Zeltstoffs lösbar befestigt ist. Die mehreren Stützstangen sind drehbar mit einer Innenkante eines Kofferraumdeckels gekoppelt, der sich an einem hinteren oberen Abschnitt des Kofferraums befindet, wobei ein Ende davon offen ist. Die mehreren Stützstangen sind so vorgesehen, dass das andere Ende durch eine Oberkante der Bodenplatte gestützt werden kann, die zu dem hinteren Bodenabschnitt des Kofferraums gezogen wird.

Die DE102015005661 B3 offenbart eine Campingbox bestehend aus einem quaderförmigen Kasten mit der Vorderwand, der Rückwand sowie die Vorder- und Rückwand verbindende Seitenwände. Die Liegefläche ist segmentiert und erstreckt sich oberhalb des Kastens. An den Seitenwänden sind verschwenkbare quaderförmige erste und zweite Schrankteile angeordnet, wobei die zweiten Schrankteile die Vorderwand in der Liegeflächenebene überragen. Die Schrankteile lassen sich angeklappt an die Vorderfront der Schrankteile in eine Öffnung des Kastens verschwenken.

Schließlich offenbart die JP2000052845 A eine Kabine, die als separater Körper von einem Fahrzeug ausgebildet und in das Fahrzeug einschiebbar ist. Die von vorderen und hinteren Laufrollen getragene Kabine ist im ausgezogenen Zustand der Laufrollen beweglich, und Hebeteile können in einem stationären Teil angeordnet sein, wenn die Laufrollen angehoben werden.

Es stellt sich daher die Aufgabe, eine Campingbox vorzuschlagen, mit deren Hilfe es möglich wird, den Wohnraum üblicher Transporter, Kleinbusse, Vans und Kombis, in sehr kurzer Zeit, mit wenigen Handgriffen zu vergrößern. Das Fahrzeug soll in seiner Form aber in der Zeit außerhalb der Campingnutzung in der üblichen Weise verwendbar sein. Die Campingbox soll weiterhin sehr platzsparend zu transportieren bzw. zu lagern sein.

Erfindungsgemäß wird die Aufgabe mit einer Campingbox nach Anspruch 1 gelöst. Vorteilhafte Ausgestaltungen sind in den rückbezogenen Unteransprüchen offenbart.

Die erfindungsgemäße Campingbox weist mindestens eine Bodenplatte, drei Seitenwände, ein Dachelement, mindestens ein oder zwei Stützelemente, sowie Befestigungselemente auf. Die Campingbox nimmt zwei Grundzustände ein. Einen Transportzustand und einen ausgeklappten Zustand.

Im Transportzustand ist die Campingbox zusammengeklappt und bildet eine flache, auf die Ladefläche eines Automobils passende geschlossene Box oder Kiste von im Wesentlichen quaderförmiger Gestalt.

Im Transportzustand finden in der Box oder Kiste mindestens die Seitenwände, die Stützelemente und die Befestigungselemente liegend zwischen der Bodenplatte und dem Dachelement Platz. Die Bodenplatte und das Dachelement bilden dabei ein oberes und ein unteres Boxteil aus.

Die Bodenplatte oder das Dachelement oder beide (die Bodenplatte und das Dachelement) weisen dabei erfindungsgemäß einen umlaufenden Rand auf, der sich senkrecht von der Bodenplatte bzw. dem Dachelement weg erstreckt. Beim Zusammenfügen des oberen und unteren Boxteils bildet die Bodenplatte die untere Boxwandung, das Dachelement die obere Boxwandung und der Rand die seitlichen Boxwandungen aus. Alternativ ist erfindungsgemäß der umlaufende Rand von Bodenplatte und Dachelement an der ersten Seite als eine gemeinsame abnehmbare oder umklappbare Verschlussplatte ausgeführt.

Zum Verschließen der Box sind Verschlusselemente vorgesehen, die die Boxteile lösbar miteinander verbinden.

Optional ist der Rand an einer ersten Seite, mit der die Bodenplatte bzw. das Dachelement im ausgeklappten Zustand der Campingbox an den Laderaum des Automobils anschließt, abnehmbar oder umklappbar.

Im ausgeklappten Zustand werden auf die Bodenplatte (bzw. wenn ein Rand vorhanden ist, auf diesen Rand) die Seitenteile so aufgesetzt, dass die erste Seite offen bleibt. Die Seitenelemente werden mittels leicht zu lösenden Befestigungselementen mit der Bodenplatte (bzw. aufsitzend auf deren Rand, wenn vorhanden) befestigt. Optional sind die Seitenteile an der Bodenplatte bzw. dem umlaufenden Rand der Bodenplatte mittels Scharnieren befestigt. Weiterhin optional werden die Seitenelemente untereinander mit leicht zu lösenden Befestigungselementen verbunden. Vorzugsweise weisen die Seitenwände und die Bodenplatte bzw. das Dachelement oder die Ränder von Bodenplatte und Dachelement zur Verbesserung der Verbindung untereinander formschlüssige Verbindungshilfen auf. Bei diesen Verbindungshilfen handelt es sich bspw. um Nut-Feder-Verbindungen oder Loch-Zapfen-Verbindungen.

Die Campingbox bildet im ausgeklappten Zustand eine Erweiterung des Laderaumes des Automobils, indem sie an der hinteren Öffnung des Laderaumes angeordnet ist und die Bodenplatte an der ersten Seite am hinteren Ende des Automobils aufliegt und an einer der ersten Seite gegenüberliegenden Seite durch die Stützelemente abgestützt wird. Die drei Seitenwände sind mittels geeigneter Befestigungselemente auf der Bodenplatte (bzw. dem Rand) so angeordnet, dass sie einen zur Ladefläche des Automobils hin geöffneten nutzbaren Raum ausbilden.

Das Dach der ausgeklappten Campingbox wird in einer ersten Ausführungsform durch das Dachelement gebildet. Das Dachelement bildet somit im ausgeklappten Zustand der Campingbox die obere Abdeckung des nutzbaren Raumes. In diesem Falle werden die Seitenelemente ebenfalls mittels leicht zu lösenden Befestigungselementen mit dem Dachelement bzw. wenn das Dachelement einen umlaufenden Rand aufweist, mit diesem Rand, lösbar verbunden. Optional steht das Dachelement der ausgeklappten Campingbox mit dem Schloss der hochgeklappten Heckklappe lösbar in Eingriff.

In einer zweiten Ausführungsform bildet die hochgeklappte Heckklappe des Automobils das Dach der Campingbox, oder zumindest einen Teil des Daches des nutzbaren Raums. In diesem Falle erfolgt eine Verbindung der Seitenwände mit der hochgeklappten Heckklappe mit Verschlusselementen die als starre Formteile und/oder als flexible Formstücken ausgeführt sind. Vorzugsweise finden auch diese Verschlusselemente im zusammengeklappten Zustand in der Campingbox Platz. In dieser Ausführungsform bildet somit die Heckklappe des Automobils teilweise oder vollständig die obere Abdeckung des nutzbaren Raumes. Optional steht auch in dieser Ausführungsform das Dachelement der ausgeklappten Campingbox mit dem Schloss der hochgeklappten Heckklappe lösbar in Eingriff.

Optional ist das Dachelement mehrteilig ausgeführt, so dass lediglich ein Teil des Dachelements als obere Abdeckung in Kombination mit der hochgeklappten Heckklappe des Automobils und optional weiteren Verschlusselementen eingesetzt wird.

Als leicht zu lösende Befestigungselemente kommen bevorzugt Spannverschlüsse, Flügelschrauben, Drehriegel und ähnliches zum Einsatz.

Die Seitenwände bestehen bevorzugt aus einem starren, wärmegedämmten Material. Geeignet für die Seitenwände ist bspw. ein Wabenkern mit Metallrahmen, eine Styroporplatte in einem Metallrahmen, ein Sandwichelement oder ein ähnlich steifes, wärmedämmendes und leichtes Material bzw. eine Materialkombination.

Die Bodenplatte und das Dachelement können analog zu den Seitenwänden aufgebaut sein. Bei der Bodenplatte werden bei Bedarf zusätzliche Versteifungen, ein tragfähigeres Material oder ein Sandwichaufbau mit steiferen oder dickeren Schichten eingesetzt. Dies soll die Festigkeit der Bodenplatte für die Belastungen im ausgeklappten Zustand (bspw. durch Begehung und/oder zusätzliches Mobiliar oder Inneneinrichtung des nutzbaren Raumes) gewährleisten.

Optional weisen eine oder mehrere der Seitenwände Fenster, Lüftungsöffnungen oder ähnliches auf. Die Fenster und sonstigen Öffnungen sind optional mittels geeigneter Abdeckungen verschließbar.

Während des Transportes passt die Campingbox im Transportzustand auf die Ladefläche des Automobils. Im ausgeklappten Zustand liegt die Campingbox mit einer ersten Seite auf dem Ende der Ladekante des Automobils und/oder einer Anhängerkupplung auf. Wenn die Bodenplatte mit der ersten Seite auf der Anhängerkupplung aufliegt, stellt optional ein Heckträger die Verbindung der ersten Seite der Bodenplatte zur Anhängerkupplung her.

Wenn die Bodenplatte auf der Ladekante des Automobils aufliegt, wird die Bodenplatte optional an der ersten Seite mittels lösbarer Spannmittel an der Ladekante und/oder dem hinteren Ende der Ladefläche fixiert. Dazu können bspw. Spreizelement an der ersten Seite der Bodenplatte dienen, die durch Herausschrauben eine Klemmwirkung in der Öffnung der Ladefläche des Automobils erzeigen. Selbstverständlich sind auch andere lösbare Verbindungen möglich.

Die Campingbox wird im ausgeklappten Zustand an der Seite, die der ersten Seite gegenüberliegt, durch mindestens ein, vorzugsweise zwei Stützelemente abgestützt.

Optional können die Stützelemente auch an den Seiten der Bodenplatte, beabstandet zur ersten Seite, angeordnet sein. Die Stützelemente sind in diesem Falle bevorzugt an den Enden der Seiten der Bodenplatte angeordnet, die von der ersten Seite entfernt sind.

Diese Stützelemente sind vorzugsweise höhenverstellbar, um eine möglichst waagerechte Ausrichtung der Bodenplatte herstellen zu können.

Für den Fall, dass der Laderaum des Automobils hinreichend Platz bietet, ist es optional möglich, die Campingbox vor der Reise aus dem Transportzustand in den ausgeklappten Zustand zu bringen und im Fahrzeug zu montieren. Am Aufstellungsort wird zum Erreichen der endgültigen Größe nur noch die Campingbox im ausgeklappten Zustand aus dem Laderaum des Automobils herausgezogen und die Stützelemente installiert und justiert.

Zwischen der Campingbox im ausgeklappten Zustand und dem Laderaum des Automobils, an dem sie montiert ist, entstehen bauartbedingt Freiräume zu den Seitenwänden. Die Freiräume variieren abhängig vom Typ des Automobils. Die Freiräume, werden vorzugsweise mit Verschlusselementen verschlossen.

Bei den Verschlusselementen handelt es sich in einer ersten Ausführungsform um starre Formteile die lösbar in den Freiräumen befestigt werden. Die Formteile sind vorzugsweise abhängig von dem Typ des Automobils ausgebildet.

In einer zweiten Ausführungsform sind die Verschlusselemente als flexible Formstücke realisiert. Diese flexiblen Formstücke können bspw. textile Abdeckungen sein, die in den Freiräumen lösbar befestigt werden. Die lösbare Befestigung ist bspw. mittels Klettverschlüssen oder in den Formstücken angeordneten Magnetstreifen möglich. Die textile Abdeckung kann je nach Bedarf wasserdicht oder als Gaze zur Belüftung des nutzbaren Raumes bzw. des Laderaumes des Automobils ausgeführt sein.

Die Campingbox nimmt im zusammengelegten Zustand bevorzugt auch die Verschlusselemente und/oder optional Teile der Inneneinrichtung auf.

Die Erfindung ist nicht auf die dargestellten und beschriebenen Ausführungsformen beschränkt, sondern umfasst auch alle im Sinne der Erfindung gleich wirkenden

Ausführungsformen. Ferner ist die Erfindung auch nicht auf die speziell beschriebenen Merkmalskombinationen beschränkt, sondern kann auch durch jede beliebige andere Kombination von bestimmten Merkmalen aller insgesamt offenbarten Einzelmerkmale definiert sein, sofern sich die Einzelmerkmale nicht gegenseitig ausschließen, oder eine spezifische Kombination von Einzelmerkmalen nicht explizit ausgeschlossen ist.

### Figuren

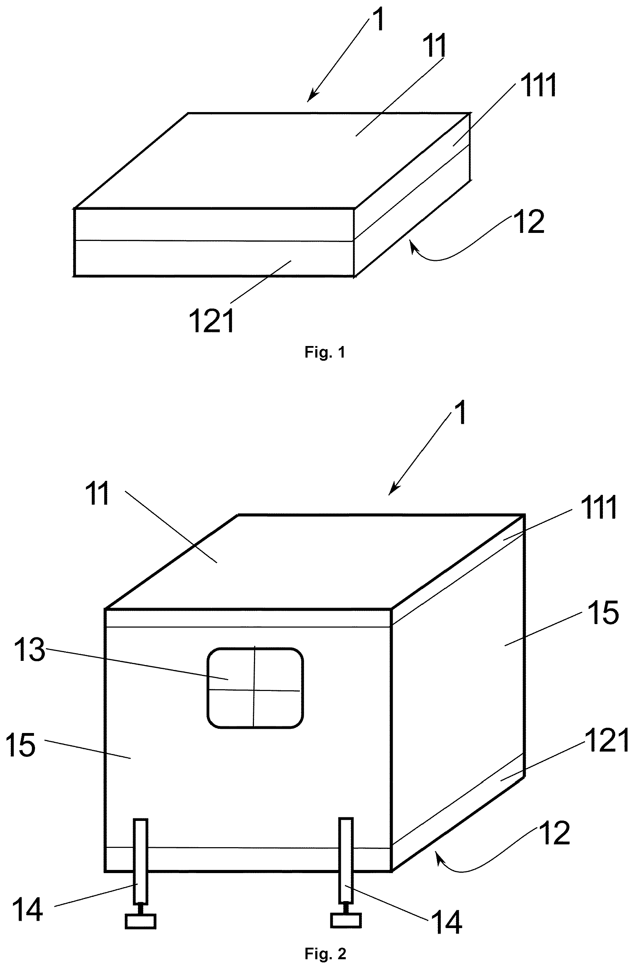

Fig. 1 zeigt schematisch die Campingbox 1 im zusammengelegten Zustand. Die Deckfläche der Campingbox 1 wird durch das Dachelement 11 gebildet. Die Bodenfläche besteht aus der Bodenplatte 12. Die Seitenflächen der zusammengelegten Campingbox 1 werden durch den Rand 111 des Dachelements 11, der auf den Rand 121 der Bodenplatte 12 aufgesetzt ist, gebildet.
Fig. 2 zeigt schematisch die Campingbox 1 im ausgeklappten Zustand. Die Seitenwände 15 sind auf den Rand 121 der Bodenplatte 12 aufgesetzt. Das Dachelement 11 mit seinem Rand 111 schließt die Campingbox nach oben ab. In der rückwärtigen Seitenwand 15 (der von der ersten Seite abgewandten Seite) ist ein Fenster 13 angeordnet. Die Stützelemente 14 stützen die Campingbox 1 an der von der ersten Seite abgewandten Seite der Campingbox 1.

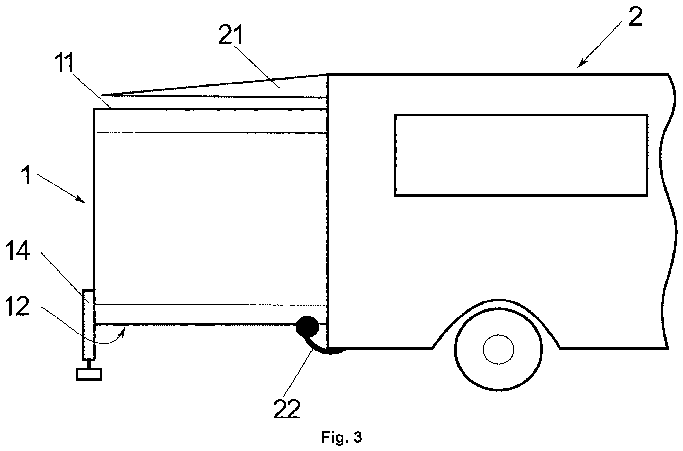

Fig. 3 zeigt schematisch die Campingbox 1 im ausgeklappten Zustand. Die Campingbox 1 ist an das Automobil 2 in Verlängerung der Ladefläche unterhalb der Heckklappe 21 angebaut. Die Campingbox 1 wird hier zusätzlich von der Anhängerkupplung 22 gehalten.

Die Campingbox 1 ist im zusammengeklappten Zustand 120 cm breit, 130 cm lang und 28 cm hoch. Die Deckfläche der zusammengeklappten Campingbox 1 wird durch das Dachelement 11 gebildet Das Dachelement 11 besteht aus carbonfaserverstärkten PP Wabenplatte (Ultraflight) und weist eine Materialdicke von 1 cm auf. Die Bodenplatte 12 besteht aus einer Aluminiumwabenplatte (Alucore) von 1 cm Materialdicke. Sowohl Dachelement 11 als auch Bodenplatte 12 weisen einen umlaufenden Rand (111, 121) von jeweils 14 cm Höhe auf. Die umlaufenden Ränder entsprechen sowohl hinsichtlich Materialdicke als auch -aufbau den Seitenwänden. Die umlaufenden Ränder (111, 121) sind an der ersten Seite als eine gemeinsame abnehmbare Abdeckung ausgebildet.

Im zusammengeklappten Zustand sind in der Campingbox 1 weiterhin drei Seitenwände 15 enthalten. Die Seitenwand 15 für die der ersten Seite gegenüberliegende Seite (Heckwand) weist Abmessungen von 120 cm Breite und 92 cm Höhe auf. Diese Seitenwand 15 verfügt über ein Fenster. Die beiden Seitenwände 15 für der ersten Seite benachbarten Seiten weisen Abmessungen von 130 cm mal 92 cm auf. Alle drei Seitenwände 15 bestehen aus Polypropylen und sind 1 cm dick.

Weiterhin sind in der zusammengeklappten Campingbox 1 zwei höhenverstellbare Stützelemente 14 sowie Formstücken zum Lückenverschluss (siehe unten) enthalten.

Im ausgeklappten Zustand ruht die Bodenplatte 12 mit der ersten Seite auf der Ladekante des Automobils 2 und wird dort an der Anhängerkupplung 22 mittels eines Heckträgers (nicht dargestellt) gehalten. Die Heckklappe 21 des Automobils 2 ist hochgeklappt und verläuft oberhalb des Dachelements 11. In der vorliegenden Ausführungsform wird die Heckklappe 22 mit der Campingbox 1 verriegelt. Das Orginalschloß des Fahrzeugs rastet dabei in dem Dachelement 11 ein.

Auf der von der ersten Seite abgewandten Seite sind die beiden Stützelemente 14 angeordnet, die mittels ihrer Höhenverstellung so eingestellt werden, dass die Bodenplatte 12 der ausgeklappten Campingbox 1 versetzt, jedoch parallel zur Ladefläche des Automobils 2 verläuft.

Die Seitenwände 15 weisen an der Kante, mit der Sie auf den umlaufenden Rand 121 der Bodenplatte 12 aufgesetzt werden Scharniere (nicht dargestellt) auf. Im nicht ausgeklappten Zustand der Campingbox 1 liegen die Seitenwände 15 im Inneren der Campingbox 1. Die Seitenwände 15 sind in den Scharnieren drehbar gelagert und werden beim Ausklappen senkrecht gestellt. An ihrer Oberseite weisen die Seitenwände 15 Öffnungen mit jeweils einer Querstrebe (nicht dargestellt) auf. Das Dachelement 11 ist in seinem umlaufenden Rand 111 mit Drehriegeln (nicht dargestellt) versehen. Die Drehriegel weisen Haken auf, die beim Verriegeln hinter die Querstreben der Öffnungen der Seitenwände 15 greifen und so eine lösbare Verbindung herstellen.

Im ausgeklappten Zustand der Campingbox 1 entstehen Freiräume (nicht dargestellt) oder Lücken zwischen der Campingbox 1 an ihrer ersten Seite und dem Laderaum des Automobils 2. Die Freiräume werden mittels Formstücke (nicht dargestellt) aus Schaumplast verschlossen, die Magnetstreifen aufweisen, mittels derer sie an dem Metallrahmen des Laderaumes des Automobils 2 haften.

Im zusammengeklappten Zustand der Campingbox 1 sind die Seitenwände 15, immer noch in ihren Scharnieren ruhend ins Innere der Campingbox 1 geklappt. Die Befestigung des Dachelements 11 mit seinem Rand 111 auf dem Rand der Bodenplatte 12 mit ihrem Rand 121 erfolgt, indem im Rand 121 der Bodenplatte 12 ebenfalls Öffnungen mit jeweils einer Querstrebe aufweisen, in die jene die Drehriegel des Dachelements 11 eingreifen, die der ersten Seite am nächsten liegen. Um eine leichte Erreichbarkeit der Drehriegel im zusammengeklappten Zustand der Campingbox 1 zu gewährleisten, sind diese Drehriegel sehr nah zur ersten Seite positioniert. Auf der der ersten Seite gegenüberliegenden Seite weist die Campingbox 1 zwei Spannverschlüsse auf, die oberes und unteres Boxteil zusammenhalten. Die erste Seite der Campingbox 1 wird im zusammengeklappten Zustand durch eine Verschlussplatte verschlossen, die an Oberteil- und Unterteil der Campingbox 1 ebenfalls mittels Spannverschlüssen befestigt ist und diese beiden Teile zusätzlich zusammenhält. Die Verschlussplatte vereint dabei die umlaufenden Ränder 111, 121 an der ersten Seite der Campingbox 1. Die Verschlussplatte wird im ausgeklappten Zustand der Campingbox 1 als Sideboard an der Außenseite der Campingbox 1 genutzt.

### Bezugszeichen

- 1: Campingbox
- 11: Dachelement
- 111: Rand des Dachelements
- 12: Bodenplatte
- 121: Rand der Bodenplatte
- 13: Fenster
- 14: Stützelement
- 15: Seitenwand
- 2: Automobil
- 21: Heckklappe
- 22: Anhängerkupplung

## Patentansprüche

1. Campingbox, aufweisend mindestens eine Bodenplatte, drei Seitenwände, ein Dachelement, ein oder zwei Stützelemente, sowie Befestigungselemente, wobei
- die Campingbox in einem Transportzustand eine geschlossene flache Box bildet, in der die Seitenwände, die Stützelemente und die Befestigungselemente liegend zwischen der Bodenplatte und dem Dachelement angeordnet sind, wobei die Campingbox im zusammengelegten Zustand auf die Ladefläche eines Automobils passt,
die Campingbox in einem ausgeklappten Zustand eine Erweiterung des Laderaumes des Automobils ausbildet, indem sie an der hinteren Öffnung des Laderaumes angeordnet ist und die Bodenplatte an einer ersten Seite am hinteren Ende des Automobils aufliegt und an einer der ersten Seite gegenüberliegenden Seite durch die Stützelemente abgestützt wird, sowie die drei Seitenwände mittels geeigneter Befestigungselemente an der Bodenplatte so angeordnet sind, dass sie einen zur Ladefläche des Automobils hin geöffneten nutzbaren Raum ausbilden, **dadurch gekennzeichnet , dass** die Bodenplatte oder das Dachelement oder beide (die Bodenplatte und das Dachelement) einen umlaufenden Rand aufweisen, der sich senkrecht von der Bodenplatte bzw. dem Dachelement weg erstreckt, wobei im Transportzustand die Bodenplatte die untere Boxwandung der Campingbox, das Dachelement die obere Boxwandung der Campingbox und
a. der Rand der Bodenplatte oder des Dachelements die seitlichen Boxwandungen bildet, oder
b. der Rand der Bodenplatte und der Rand des Dachelements die seitlichen Boxwandungen bilden, oder
c. a. oder b. zutrifft, sowie auf der ersten Seite der Rand von Bodenplatte und Dachelement als eine gemeinsame Verschlussplatte ausgeführt ist.

2. Campingbox nach Anspruch 1, **dadurch gekennzeichnet, dass** das Dachelement im ausgeklappten Zustand der Campingbox die obere Abdeckung des nutzbaren Raumes bildet.

3. Campingbox nach Anspruch 1, **dadurch gekennzeichnet, dass** im ausgeklappten Zustand der Campingbox eine Heckklappe des Automobils teilweise oder vollständig die obere Abdeckung des nutzbaren Raumes bildet.

4. Campingbox nach Anspruch 1, **dadurch gekennzeichnet, dass** im ausgeklappten Zustand der Campingbox die Bodenplatte und die Seitenwände durch leicht zu lösende Befestigungselemente oder Scharniere untereinander verbunden sind.

5. Campingbox nach Anspruch 2, **dadurch gekennzeichnet, dass** im ausgeklappten Zustand der Campingbox das Dachelement und die Seitenwände durch leicht zu lösende Befestigungselemente untereinander verbunden sind, wobei als leicht zu lösende Befestigungselemente bevorzugt Spannverschlüsse, Flügelschrauben, Drehriegel zum Einsatz kommen.

6. Campingbox nach Anspruch 1, **dadurch gekennzeichnet, dass** der Rand an einer ersten Seite, mit der die Bodenplatte bzw. das Dachelement im ausgeklappten Zustand der Campingbox an den Laderaum des Automobils anschließt, abnehmbar oder umklappbar ist.

7. Campingbox nach einem der vorhergehenden Ansprüche, **dadurch gekennzeichnet, dass** die Stützelemente höhenverstellbar sind.

8. Campingbox nach einem der vorhergehenden Ansprüche, **dadurch gekennzeichnet, dass** die Seitenwände aus einem starren, wärmegedämmten Material bestehen.

9. Campingbox nach einem der vorhergehenden Ansprüche, **dadurch gekennzeichnet, dass** in einer oder mehreren Seitenwänden Fenster angeordnet sind.

10. Campingbox nach einem der vorhergehenden Ansprüche, **dadurch gekennzeichnet, dass** im ausgeklappten Zustand der Campingbox Freiräume zwischen den Seitenwänden, die an den Laderaum des Automobils grenzen sowie ggf. dem Dachelement und dem Laderaum des Automobils entstehen, mit Verschlusselementen verschlossen sind.

11. Campingbox nach Anspruch 10, **dadurch gekennzeichnet, dass** es sich bei den Verschlusselementen um starre Formteile und/oder flexible Formstücken handelt, die lösbar in den Freiräumen befestigt werden.

12. Campingbox nach einem der vorhergehenden Ansprüche, **dadurch gekennzeichnet, dass** die Campingbox im zusammengelegten Zustand weiterhin auch die Verschlusselemente und/oder Teile der Inneneinrichtung aufnimmt.

13. Campingbox nach einem der vorhergehenden Ansprüche, **dadurch gekennzeichnet, dass** im ausgeklappten Zustand der Campingbox die Bodenplatte mit der ersten Seite auf der Ladekante des Automobils und/oder auf einer Anhängerkupplung aufliegt.

14. Campingbox nach Anspruch 13, **dadurch gekennzeichnet, dass** im ausgeklappten Zustand der Campingbox und wenn die Bodenplatte mit der ersten Seite auf der Anhängerkupplung aufliegt, ein Heckträger die Verbindung der ersten Seite der Bodenplatte zur Anhängerkupplung herstellt.

15. Campingbox nach Anspruch 13, **dadurch gekennzeichnet, dass** im ausgeklappten Zustand der Campingbox und wenn die Bodenplatte auf der Ladekante des Automobils aufliegt, die Bodenplatte an der ersten Seite mittels lösbarer Spannmittel an der Ladekante und/oder dem hinteren Ende der Ladefläche fixiert ist.

## Claims

1. Camping box, comprising at least one base plate, three side walls, one roof element, one or two support elements as well as fastening elements, wherein
- the camping box forms a closed flat box in a transport state, in which the side walls, the support elements and the fastening elements are arranged lying between the base plate and the roof element, the camping box fitting on the loading area of an automobile in the folded state,
the camping box forming an extension of the loading space of the automobile in an unfolded state, in that it is arranged at the rear opening of the loading space and the base plate rests on a first side at the rear end of the automobile and is supported by the support elements on a side opposite the first side, and the three side walls are arranged on the base plate by means of suitable fastening elements in such a way that they form a usable space which is open towards the loading area of the automobile, **characterised in that** the base plate or the roof element or both (the base plate and the roof element) have a circumferential edge which extends vertically away from the base plate or the roof element, respectively, wherein in the transport state the base plate forms the lower box wall of the camping box, the roof element forms the upper box wall of the camping box and
a. the edge of the base plate or the roof element forms the side walls of the box, or
b. the edge of the base plate and the edge of the roof element form the lateral box walls, or
c. a. or b. applies, and on the first side the edge of the base plate and roof element are designed as a common locking plate

2. Camping box according to claim 1, **characterised in that** the roof element forms the upper cover of the usable space in the camping box's unfolded state.

3. Camping box according to claim 1, **characterised in that** in the camping box's unfolded state, a tailgate of the automobile partially or completely forms the upper cover of the usable space.

4. Camping box according to claim 1, **characterised in that**, in the camping box's unfolded state, the base plate and the side walls are connected to one another by easily detachable fastening elements or hinges.

5. Camping box according to claim 2, **characterised in that**, in the camping box's unfolded state, the roof element and the side walls are connected to one another by easily detachable fastening elements, the easily detachable fastening elements preferably being tension locks, wing screws and turning locks.

6. Camping box according to claim 1, **characterised in that** the edge on a first side, with which the base plate or the roof element adjoins the loading space of the automobile in the camping box's unfolded state, is removable or stowable.

7. Camping box according to one of the preceding claims, **characterised in that** the support elements are height adjustable.

8. Camping box according to one of the preceding claims, **characterised in that** the side walls consist of a rigid, thermally insulated material.

9. Camping box according to one of the preceding claims, **characterised in that** windows are arranged in one or more side walls.

10. Camping box according to one of the preceding claims, **characterised in that**, in the camping box's unfolded state, free spaces between the side walls, which adjoin the loading space of the automobile and, if applicable, arise between the roof element and the loading space of the automobile, are locked with locking elements.

11. Camping box according to claim 10, **characterised in that** the locking elements are rigid moulded parts and/or flexible moulded bodies which are detachably fastened in the free spaces.

12. Camping box according to one of the preceding claims, **characterised in that** the camping box also accommodates the locking elements and/or parts of the interior fitting in the folded state.

13. Camping box according to one of the preceding claims, **characterised in that**, in the camping box's unfolded state, the base plate rests with the first side on the loading edge of the automobile and/or on a trailer coupling.

14. Camping box according to claim 13, **characterised in that** in the camping box's unfolded state and when the base plate rests with the first side on the trailer coupling, a rear carrier establishes the connection of the first side of the base plate to the trailer coupling.

15. Camping box according to claim 13, **characterised in that** in the camping box's unfolded state and when the base plate rests on the loading edge of the automobile, the base plate is fixed on the first side to the loading edge and/or the rear end of the loading area by means of detachable clamping means.

## Revendications

1. Boîte de camping, présentant au moins une plaque formant fond, trois parois latérales, un élément formant toit, un ou deux éléments de soutien, ainsi que des éléments de fixation, dans laquelle
- la boîte de camping forme, dans un état de transport, une boîte plate fermée dans laquelle les parois latérales, les éléments de soutien et les éléments de fixation sont disposés de manière à être couchés entre la plaque formant fond et l'élément formant toit, dans laquelle la boîte de camping s'adapte, dans l'état replié, à la surface de chargement d'une automobile,
la boîte de camping, dans un état déployé, forme une extension de l'espace de chargement de l'automobile par le fait que ladite boîte de camping est disposée au niveau de l'ouverture arrière de l'espace de chargement et la plaque formant fond repose sur un premier côté au niveau de l'extrémité arrière de l'automobile et est soutenue par les éléments de soutien au niveau d'un côté opposé au premier côté, et les trois parois latérales sont disposées sur la plaque formant fond au moyen d'éléments de fixation appropriés de sorte qu'elles forment un espace utile ouvert vers la surface de chargement de l'automobile, **caractérisée en ce que** la plaque formant fond ou l'élément formant toit ou les deux (la plaque formant fond et l'élément formant toit) présentent un bord circonférentiel qui s'étend perpendiculairement à la plaque formant fond ou à l'élément formant toit, dans laquelle, dans l'état de transport, la plaque formant fond forme la paroi de boîte inférieure de la boîte de camping, l'élément formant toit forme la paroi de boîte supérieure de la boîte de camping et
a. le bord de la plaque formant fond ou de l'élément formant toit forme les parois de boîte latérales, ou
b. le bord de la plaque formant fond et le bord de l'élément formant toit forment les parois de boîte latérales, ou
c. a. ou b. est le cas, et sur le premier côté, le bord de la plaque formant fond et de l'élément formant toit est réalisé comme une plaque de fermeture commune.

2. Boîte de camping selon la revendication 1, **caractérisée en ce que** l'élément formant toit forme, dans l'état déployé de la boîte de camping, l'élément de recouvrement supérieur de l'espace utile.

3. Boîte de camping selon la revendication 1, **caractérisée en ce que,** dans l'état déployé de la boîte de camping, un hayon arrière de l'automobile forme partiellement ou entièrement l'élément de recouvrement supérieur de l'espace utile.

4. Boîte de camping selon la revendication 1, **caractérisée en ce que,** dans l'état déployé de la boîte de camping, la plaque formant fond et les parois latérales sont reliées entre elles par des éléments de fixation ou des charnières faciles à défaire.

5. Boîte de camping selon la revendication 2, **caractérisée en ce que,** dans l'état déployé de la boîte de camping, l'élément formant toit et les parois latérales sont reliés entre eux par des éléments de fixation faciles à défaire, dans laquelle les éléments de fixation faciles à défaire utilisés sont de préférence des fermetures à grenouillère, des vis à oreilles, des loquets rotatifs.

6. Boîte de camping selon la revendication 1, **caractérisée en ce que** le bord sur un premier côté, avec lequel la plaque formant fond ou l'élément formant toit est relié à l'espace de chargement de l'automobile dans l'état déployé de la boîte de camping, est amovible ou dépliable.

7. Boîte de camping selon l'une des revendications précédentes, **caractérisée en ce que** les éléments de soutien sont réglables en hauteur.

8. Boîte de camping selon l'une des revendications précédentes, **caractérisée en ce que** les parois latérales sont constituées d'un matériau rigide à isolation thermique.

9. Boîte de camping selon l'une des revendications précédentes, **caractérisée en ce que** des fenêtres sont disposées dans une ou plusieurs parois latérales.

10. Boîte de camping selon l'une des revendications précédentes, **caractérisée en ce que,** dans l'état déployé de la boîte de camping, des espaces libres entre les parois latérales adjacentes à l'espace de chargement de l'automobile ainsi que, éventuellement, se forment entre l'élément formant toit et l'espace de chargement de l'automobile, sont fermés par des éléments de fermeture.

11. Boîte de camping selon la revendication 10, **caractérisée en ce que** les éléments de fermeture sont des pièces moulées rigides et/ou des pièces façonnées flexibles qui sont fixées de manière amovible dans les espaces libres.

12. Boîte de camping selon l'une des revendications précédentes, **caractérisée en ce que** la boîte de camping, dans l'état replié, en outre reçoit également les éléments de fermeture et/ou des parties de l'intérieur.

13. Boîte de camping selon l'une des revendications précédentes, **caractérisée en ce que,** dans l'état déployé de la boîte de camping, la plaque formant fond repose avec le premier côté sur le rebord de chargement de l'automobile et/ou sur un attelage de remorque.

14. Boîte de camping selon la revendication 13, **caractérisée en ce que,** dans l'état déployé de la boîte de camping et lorsque la plaque formant fond repose avec le premier côté sur l'attelage de remorque, un support arrière assure la liaison du premier côté de la plaque formant fond à l'attelage de remorque.

15. Boîte de camping selon la revendication 13, **caractérisée en ce que,** dans l'état déployé de la boîte de camping et lorsque la plaque formant fond repose sur le rebord de chargement de l'automobile, la plaque formant fond est fixée sur le premier côté au niveau du rebord de chargement et/ou au niveau de l'extrémité arrière de la surface de chargement à l'aide de moyens de serrage amovibles.
